# EUROPEAN PATENT APPLICATION

(11) **EP 3 608 053 A1**
(43) Date of publication of application: **12.02.2020**
(21) Application number: 17909233.3
(22) Date of filing: 15.12.2017
(51) Int. Cl.: B23Q 11/00, B23K 11/30

(54) **CHIP-COLLECTING DEVICE**

(30) Priority: 11.05.2017 JP 2017095000
(71) Applicant: Kyokutoh Co., Ltd., Oridocho, Nisshin-shi, Aichi 4700115 (JP)
(72) Inventor: NAKAJIMA, Kotaro, Nissin-shi, Aichi 4700115 (JP)
(74) Representative: Spachmann, Holger
(86) International application number: PCT/JP2017/045046
(87) International publication number: WO 2018/207397

(57) **Abstract**

A chip collecting device (1) collects chips (M1) that are created when an electrode tip (11) is cut by using a tip dresser (10). A cover casing (2) secured to the tip dresser (10) has rectangular plate shaped first and second side walls (3), (4) opposing one another horizontally. An air suction tool (7) is connected to the first side wall (3). An air introduction hole (15) is formed in a lower part of the second side wall (4). The air introduction hole (15) inclines gradually closer to an inner side surface and inner bottom surface of the cover casing (2) towards an interior of the cover casing (2).

## Description

### TECHNICAL FIELD

The present disclosure relates to a chip collecting device for collecting chips that are created in cutting operations performed when distal ends of electrode tips of spot welding are cut by using a tip dresser.

### BACKGROUND ART

In conventional spot welding, it is known that an oxide film builds up on a distal end of an electrode tip upon repeated welding operations. Spot welding performed with an electrode tip distal end having an oxide film formed thereon causes deteriorated quality of a welded portion. For this reason, a tip dresser is generally used to periodically cut an electrode tip distal end to remove an oxide film.

Chips are created when an electrode tip distal end is cut by using the tip dresser. If the chips stick to a drive unit of an apparatus, the load on the drive unit increases. In a most unwanted case, the chips may cause a breakdown of the apparatus. It is thus desirable that such chips are collected immediately after being created.

To address this, there is a generally known device for collecting chips immediately after the chip are produced. For example, a chip collecting device disclosed in Patent Document 1 includes a cover casing secured so as to enclose a cutting blade of a tip dresser and having a plate-like shape extending horizontally. The cover casing connects to an air suction tool for sucking air from the inside of the cover casing and to an air introduction unit for introducing compressed air into the cover casing. The cover casing connects to the air suction tool at one horizontal-direction end thereof and to the air introduction unit at the other end thereof. Chips are moved together with air, by sucking air located inside the cover casing using the air suction tool while causing the chips to float due to a turbulent airflow generated by compressed air introduced into the cover casing using the air introduction unit, in order to be collected in a chip collecting box.

### Problem of the State of the Art:

International Publication WO2016/151623 reflects a related state of the art. As a technical problem of the state of the art the chip collecting device described in WO2016/151623, however, has the cover casing with a horizontally wider shape, in order not to interfere a portion of the air introduction unit mounting onto the cover casing, with the tip dresser. Thus, there is an issue that the whole device increases in size, which then requires a greater area for installation.

To avoid this issue, it is conceivable that the chip collecting device does not have the air introduction unit.

Then again, in the case that the chip collecting device has no air introduction unit, a reduced suction force is applied in a region of the interior of the cover casing on a further side from the air suction tool, and lowered chip collecting performance may be observed particularly in a region of the interior of the cover casing on a furthest side from the air suction tool.

The present disclosure is made in view of the foregoing and an object of the present disclosure is to provide a chip collecting device reduced in size and having higher chip collecting performance.

To achieve the object, the present disclosure is characterized by providing an air suction means and air introduction hole placed closer to and opposing each other in a cover casing and by devising a shape of the air introduction hole.

Specifically, the present disclosure is directed to a chip collecting device that is able to collect chips created when a distal end of an electrode tip of spot welding is cut by using a cutting blade of a tip dresser. The following solutions are then applied.

According to a first aspect of the present disclosure, the chip collecting device includes a box-shaped cover casing secured to the tip dresser to enclose the cutting blade and having rectangular plate shaped first and second side walls opposing one another horizontally; an air suction means connected to the first side wall and configured to suck air located inside the cover casing; an air introduction hole formed in the second side wall and configured to introduce air from an outside of the cover casing into an inside during air suction operation performed by the air suction means; a chip collecting means configured to collect the chips moving together with the air that is sucked by the air suction means; wherein the air introduction hole is formed in a lower part of the second side wall and inclined gradually closer to at least one of an inner side surface and inner bottom surface of the cover casing towards an interior of the cover casing.

According to a second aspect of the present disclosure which is an embodiment of the first aspect, the air introduction hole is formed to extend into an L-shape along a corner in the lower part of the second side wall.

According to a third aspect of the present disclosure which is an embodiment of the first aspect, the air introduction hole includes a pair of air introduction holes formed in respective corners in the lower part of the second side wall.

According to a fourth aspect of the present disclosure which is an embodiment of any one of the first to third aspects, the second side wall includes a base frame having a rectangular shape and a main body plate configured to be assembled into an inner part of the base frame, and the air introduction hole is formed between the base frame and the main body plate.

According to a fifth aspect of the present disclosure which is an embodiment of the fourth aspect, the main body plate includes an inner plate positioned on an inner face side of the base frame and an outer plate positioned on an outer face side of the base frame, wherein the second side wall is configured to be assembled by coupling the inner plate and the outer plate with an inner circumference portion of the base frame being sandwiched between outer circumference portions of the inner and outer plates.

### ADVANTAGEOUS EFFECTS OF INVENTION

In the first aspect of the present disclosure, there is no need to attach an air introduction unit as described in Patent Document 1 to the cover casing, and the cover casing thus can be formed to have a horizontally smaller shape. This allows the whole device to be made its size compact and spaces around an installed apparatus can be efficiently utilized. When the air suction means sucks the air located inside the cover casing, negative pressure occurs in the interior of the cover casing so that air is introduced from the outside of the cover casing into the inside through the air introduction hole. In so doing, the air introduction hole is inclined towards at least one of the inner side surface and the inner bottom surface of the cover casing, and thus the air that has passed through the air introduction hole turns back against at least one of the inner side surface and the inner bottom surface of the cover casing and moves in a swirling manner in the interior of the cover casing to generate a turbulent airflow. The chips caused to float by the turbulent airflow move to an air suction means side and are subsequently ejected into the outside of the cover casing by using the air suction means. In this manner, the chips in the cover casing can be entirely removed into the outside of the cover casing without accumulating on the inner bottom surface, enabling the chip collecting device to have high performance of collecting chips.

In the second aspect of the present disclosure, the air introduced through the air introduction hole turns back against the inner bottom and inner side surfaces of the cover casing to swirl around. Thus, the airflow in the interior of the cover casing is susceptible to turbulence to facilitate the float of the chips within the cover casing, enabling efficient removal of the chips into the outside of the cover casing.

In the third aspect of the present disclosure, the air passing through the air introduction hole is concentratedly oriented to a corner in the interior of the cover casing, where the chips particularly tend to accumulate in. The chips accumulating in corners in the interior of the cover casing thus can be entirely removed into the outside of the cover casing.

In the fourth aspect of the present disclosure, the air introduction hole of the present disclosure is formed by combining the two components and thereby there is no need of elaborate hole-making process for making an air introduction hole in the components, resulting in an easy-to-manufacture device.

In the fifth aspect of the present disclosure, as the inner and outer plates are coupled to integrate, the inner and outer plates are also integrated with the base frame. Accordingly, no additional component is required to assemble the inner and the outer plates into the base frame, enabling a cost effective device with less components.

### BRIEF DESCRIPTION OF DRAWINGS

**FIG. 1** is a perspective view illustrating a tip dresser to which a chip collecting device according to embodiments of the present disclosure is mounted.
**FIG. 2** is a cross-sectional view taken along the line II-II in FIG. 1.
**FIG. 3** is a fragmentary view taken in the direction of the arrow III in FIG. 2.
**FIG. 4** is a cross-sectional view taken along the line IV-IV in FIG. 3.
**FIG. 5** is a cross-sectional view taken along the line V-V in FIG. 3.
**FIG. 6** is a cross-sectional view taken along the line VI-VI in FIG. 3.

### DESCRIPTION OF EMBODIMENTS

Embodiments of the present disclosure will now be described in detail with reference to the drawings. It is noted that the following description of preferred embodiments is merely an example in nature.

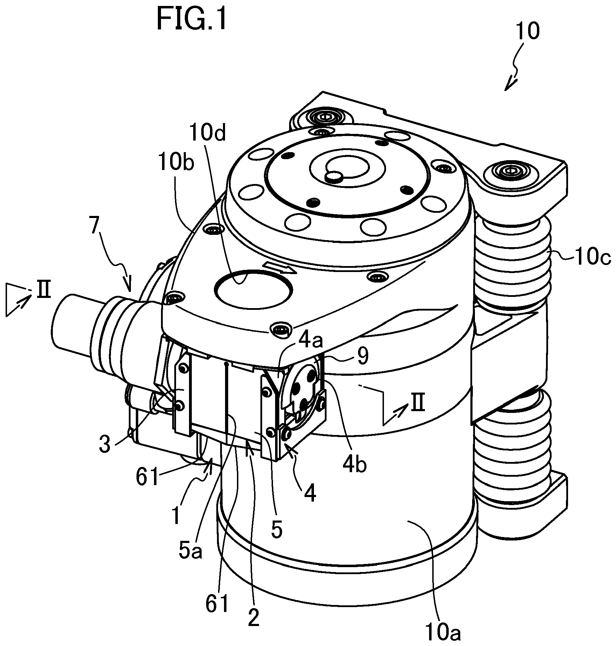

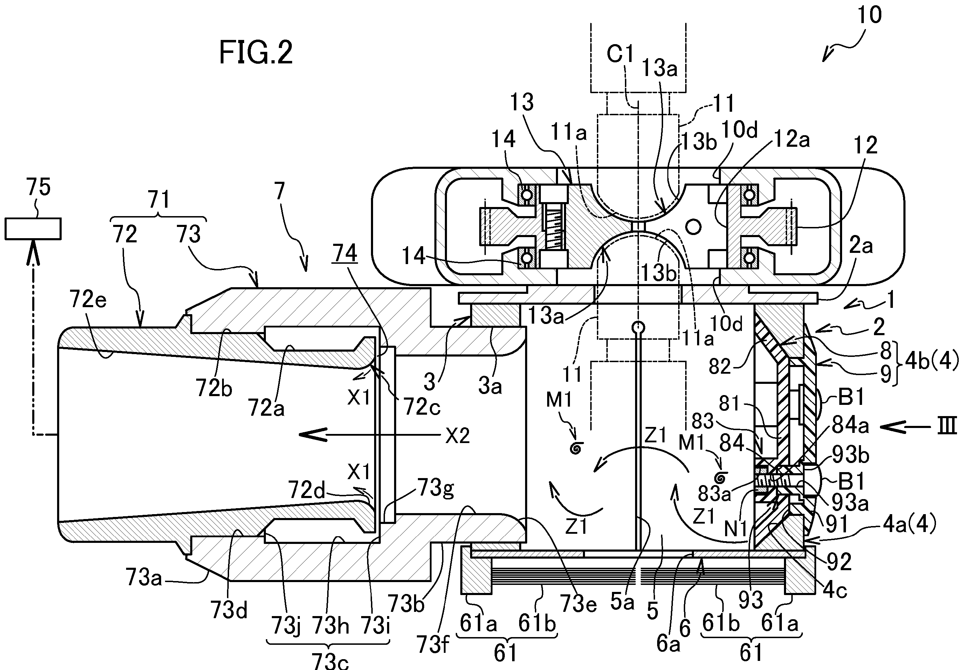

FIG. 1 illustrates a tip dresser 10 to which a chip collecting device 1 according to an embodiment of the present disclosure is mounted. As illustrated in FIG.2, the chip collecting device 1 is used for collecting chips M1 created when distal ends 11a of a pair of electrode tips 11 attached to a welding gun of spot welding are each cut by using the tip dresser 10.

As illustrated in FIG. 1, the tip dresser 10 includes a generally cylindrical motor casing 10a having a cylinder center line oriented vertically, a plate-shaped gear casing 10b extending forward of the motor casing 10a from an upper end of the motor casing 10a, and a shock absorbing mechanism 10c mounted to a rear face of the motor casing 10a and configured to absorb impact on the motor casing 10a. A drive motor that is not shown is housed inside the motor casing 10a.

As illustrated in FIG. 2, a pair of circular through-holes 10d facing each other are formed in respective top and bottom surfaces of the gear casing 10b at a center part of an extending part side of the gear casing 10b.

In an interior of the gear casing 10b and between the through holes 10d, a ringshaped output gear 12 is mounted rotatably around a vertically extending rotation axis C1 via a pair of upper and lower bearings 14.

At a center of the output gear 12 is an attachment hole 12a formed to extend there through vertically. A metal cutter 13 for cutting the distal ends 11a of the electrode tips 11 is attached in the attachment hole 12a.

The cutter 13 has a pair of curved surfaces 13a respectively opening upward and downward. Each of the curved surfaces 13a has a cutting blade 13b extending to correspond to a radial direction of the distal end of the electrode tip 11.

When the output gear 12 is turned, via a gear meshing mechanism (not shown), by a rotational drive of the drive motor housed in the motor casing 10a, the cutter 13 rotates together with the output gear 12. As the distal end of the electrode tip 11 is applied to each curved surface 13a of the cutter 13 that is rotating, the cutting blade 13b cuts the distal end of the electrode tip 11.

A box shaped cover casing 2 is secured to the bottom surface of the gear casing 10b via a ring shaped plate bracket 2a so as to enclose the cutting blade 13b of the cutter 13. The plate bracket 2a is made to allow the cover casing 2 to change mounting postures about the rotation axis C1, when the cover casing 2 is mounted to the gear casing 10b.

The cover casing 2 includes rectangular plate shaped first and second side walls 3, 4 opposing one another in a horizontal direction perpendicular to an extending direction of the gear casing 10b.

A pair of flame-retardant, flexible rectangular transparent resin sheet materials 5 are attached between one side edges of the first and second side walls 3, 4 and between the other side edges of the first and second side walls 3, 4. At a horizontal midsection of each of the resin sheet materials 5, a slit 5a is formed to extend linearly and downwardly from a portion closer to an upper end of the resin sheet material to open at a lower end.

A rectangular bottom wall 6 is provided between lower edges of the first and second side walls 3, 4. A tip passing part 6a, through which the electrode tip 11 is able to pass, is formed at a center part of the bottom wall 6.

At a bottom surface of the bottom wall 6, a pair of covering brushes 61 are attached so as to oppose one another in the horizontal direction perpendicular to the extending direction of the gear casing 10b.

The covering brush 61 includes a base plate 61a extending along the extending direction of the gear casing 10b and resin bristle bundles 61b planted on the base plate 61a. The bristle bundles 61b each extend to a midsection of the bottom wall 6 to be closer to one another.

A mounting hole 3a is formed in the first side wall 3 to extend horizontally through the first side wall 3, and connects to an air suction tool 7 (air suction means).

The air suction tool 7 includes a cylinder body 71 having a cylinder center line extending in the horizontal direction perpendicular to the extending direction of the gear casing 10b. The cylinder body 71 includes a first cylinder member 72 and a second cylinder member 73, each of which opens at both ends.

An annular first recessed groove 72a extending circumferentially about the cylinder center line is formed on an outer circumferential surface of one end side of the first cylinder member 72. The first recessed groove 72a is shaped to have a wider groove width and to be shallow.

A male thread portion 72b is formed continuously with the first recessed groove 72a and on an outer circumferential surface of a midsection of the first cylinder member 72.

An annular protuberance surface portion 72c is formed on an inner circumferential surface of the one end side of the first cylinder member 72. The annular protuberance surface portion 72c projects toward a radially inner side of the cylinder body 71 and extends circumferentially about the cylinder center line.

The annular protuberance surface portion 72c includes a protuberance surface 72d shaped to advance from one end face of the first cylinder member 72 toward the radially inner side of the cylinder body 71 and then gradually curve and extend toward another end side of the first cylinder member 72.

A blowout port side air guiding surface 72e continuous with the protuberance surface 72d is formed in a portion of the inner circumferential surface of the first cylinder member 72 from the midsection of the first cylinder member 72 to the other end. The blowout port side air guiding surface 72e is tapered to have a gradual increase in diameter in a direction away from the protuberance surface 72d.

A tapered surface portion 73a is formed on an outer circumferential surface of one end side of the second cylinder member 73. The tapered surface portion73a has a gradual decrease in diameter toward the one end.

On the other hand, an annular mounting surface portion 73b is formed on an outer circumferential surface of another end side of the second cylinder member 73. The annular mounting surface portion 73b is recessed in the shape of a step and extends along a peripheral portion of an opening of the other end.

A male thread portion (not shown) is formed on a surface of the annular mounting surface portion 73b. The male thread portion is screwed with a female thread portion (not shown) formed on an inner circumferential surface of the mounting hole 3a of the first side wall 3 so as to couple the second cylinder member 73 with the first side wall 3.

An annular second recessed groove 73c extending circumferentially about the cylinder center line is formed on an inner circumferential surface of a midsection of the second cylinder member 73. The second recessed groove 73c is shaped to have a wider groove width and to be shallow.

The second recessed groove 73c includes a belt-shaped bottom surface 73h extending in an annular manner about the cylinder center line, a first annular face 73i extending from one edge of the belt-shaped bottom surface 73h in a direction orthogonal to the cylinder center line, and a second annular face 73j extending from another edge of the belt-shaped bottom surface 73h in the direction orthogonal to the cylinder center line.

A female thread portion 73d is formed continuously with the second recessed groove 73c and on an inner circumferential surface of the one end side of the second cylinder member 73. The female thread portion 73d can be screwed with the male thread portion 72b.

On the other hand, a tapered air intake surface 73e and an intake port side air guiding surface 73f formed continuously with the air intake surface 73e are provided on an inner circumferential surface of the other end side of the second cylinder member 73. The air intake surface 73e is formed to have a gradual decrease in diameter inwardly of the second cylinder member 73 from the peripheral portion of the opening of the other end of the second cylinder member 73. The intake port side air guiding surface 73f extends lineally toward the one end side of the second cylinder member 73 along a cylinder center line of the second cylinder member 73. An annular stepped surface portion 73g extending along a periphery portion of an opening of the second recessed groove 73c is formed on a portion of the intake port side air guiding surface 73f closer to the one end side of the second cylinder member 73.

The cylinder body 71 is then assembled by inserting the one end side of the first cylinder member 72 into the interior of the second cylinder member 73 through the one end of the second cylinder member 73 and screwing the male thread portion 72b of the first cylinder member 72 with the female thread portion 73d of the second cylinder member 73. When the first and second cylinder members 72, 73 are assembled, the first and second recessed grooves 72a, 73c face each other.

In the assembled first and second cylinder members 72, 73, the one end face of the first cylinder member 72 opposes the first annular face 73i. A compressed air exit port 74 is thus formed to have an annulus shape that extends circumferentially about the cylinder center line between the one end face of the first cylinder member 72 and the first annular face 73i and to be slot shaped to extend straight along a radial direction of the cylinder body 71.

Upon being introduced in between the first and second recessed grooves 72a, 73c from a compressed air introduction part (not shown), compressed air advances from the compressed air exit port 74 toward the interior of the cylinder body 71 to flow smoothly along the protuberance surface 72d of the annular protuberance surface portion 72c in a direction of a blowout port side air guiding surface 72e (see the arrow X1 in FIG.2). An air flow is then generated from a second cylinder member 73 side toward a first cylinder member 72 side in the interior of the cylinder body 71(see the arrow X2 in FIG.2), and thus air in the cover casing 2 is sucked out.

As illustrated in FIG.2, a chip collecting box 75 (chip collecting means) is connected on the other end side of the first cylinder member 72. The chip collecting box 75 collects the chips M1 that moves together with the air sucked by the air suction tool 7.

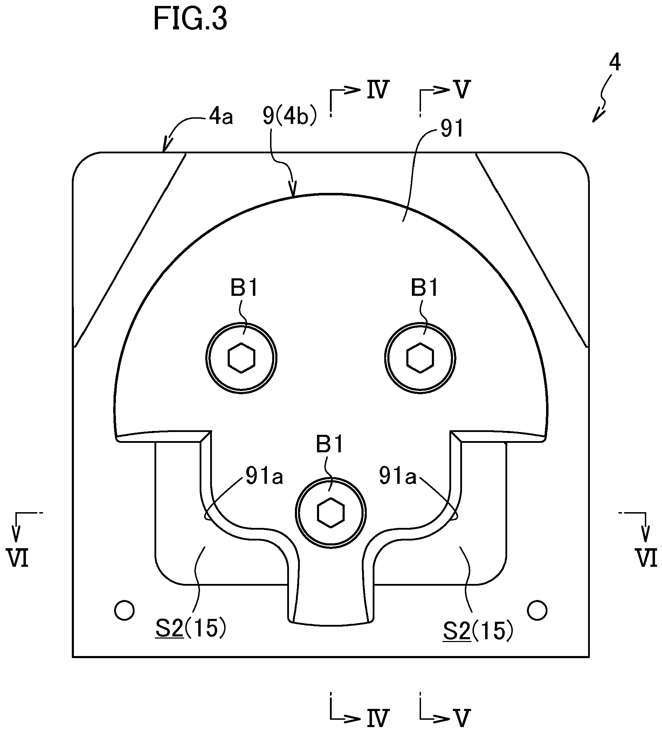

As illustrated in FIG.3, the second side wall 4 includes a metal base frame 4a formed in the shape of a rectangle frame and a resin main body plate 4b assembled into an inner part of the base frame 4a.

The base frame 4a includes an inner peripheral part of an upper half portion thereof that is in the shape of a semicircle in front view and an inner peripheral part of a lower half portion thereof that is U-shaped in front view.

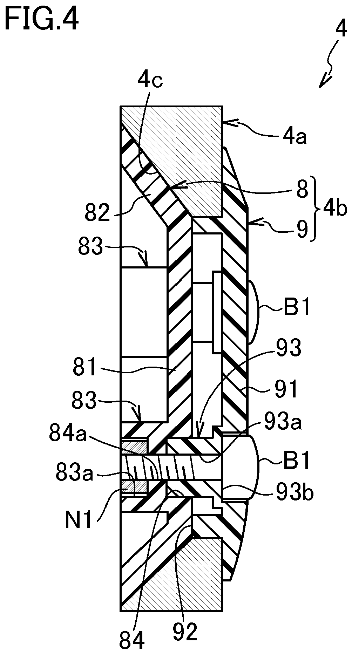

As illustrated in FIGS. 4 to 6, the base frame 4a also has an inner circumferential surface including a sloping face 4c that is formed to have a gradual increase in diameter toward the interior of the cover casing 2, in a generally half portion of an inner face side of the base frame 4a.

The main body plate 4b includes, as illustrated in FIGS. 4 to 6, an inner plate 8 positioned on the inner face side of the base frame 4a and an outer plate 9 positioned on an outer face side of the base frame 4a.

The inner plate 8 includes a base portion 81 that has a flat plate shape and extends vertically and an inclined portion 82 that is formed to have a gradual increase in diameter from an outer peripheral part of the base portion 81 toward the interior of the cover casing 2.

A pair of hole forming faces 82a are formed at positions of a lower part of the inclined portion 82 that correspond to respective corners of base frame 4a.

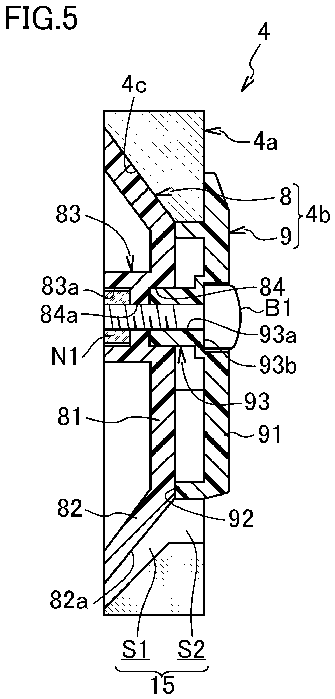

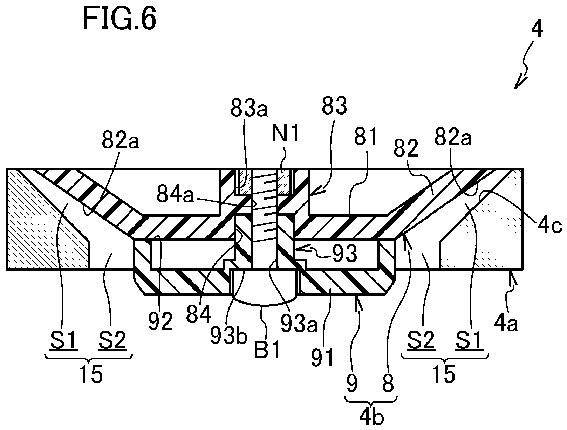

A part of the inclined portion 82 except the hole forming faces 82a are shaped to correspond to the sloping face 4c. When the part of the inclined portion 82 except the hole forming faces 82a abuts with the sloping face 4c of the base frame 4a, a pair of gaps S1 are formed between the sloping face 4c and the hole forming faces 82a, as illustrated in FIGS. 5 and 6. The gap S1 is shaped to have a gradual decrease in width toward the interior of the cover casing 2.

Three inner bosses 83 are formed on a backside of the base portion 81. The inner bosses 83 have a positional relationship that the inner bosses 83 are respective apices of an inverted equilateral triangle in the back view of the base portion 81.

The inner boss 83 has a retaining recess 83a opening at a protruding end of the inner boss 83. A nut N1 can be retained in the retaining recess 83a.

Three fitting recesses 84 are formed at positions of a front side of the base portion 81 that correspond to the respective inner bosses 83.

A communication hole 84a communicating with the retaining recess 83a is formed in a bottom surface of the fitting recess 84. A bolt B1 can be inserted into the communication hole 84a.

The outer plate 9 includes a plate shaped cover portion 91 that covers an opening of the base frame 4a. As illustrated in FIG.3, a pair of cutouts 91a cut into an L-shape along the respective corners of the base frame 4a are formed in a lower half part of the cover portion 91.

An annular rib 92 extending along an outer peripheral part of the outer plate 9 protrudes on a backside of the outer plate 9.

A portion of the annular rib 92 that does not correspond to the cutouts 91a is located internal to the outer peripheral part of the outer plate 9 and can be fitted with the inner circumferential surface of the base frame 4a.

As the annular rib 92 is fitted with the inner circumferential surface of the base frame 4a, a pair of gaps S2 are formed between the inner circumferential surface of the base frame 4a and a portion of the annular rib 92 that corresponds to the cutouts 91a, as illustrated in FIGS. 5 and 6.

Three outer bosses 93 capable of being fitted with the respective fitting recesses 84 protrude at positions of a backside of the cover portion 91 that correspond to the respective fitting recesses 84.

A insertion hole 93a is formed in the outer boss 93 and the bolt B1 can be inserted into the insertion hole 93a. A counterbore 93b is formed at an opening of the insertion hole 93a on a front side of the outer plate 9.

As the inclined portion 82 of the inner plate 8 abuts with the sloping face 4c of the base frame 4a and the annular rib 92 of the outer plate 9 fits with the inner circumferential surface of the base frame 4a, each of the outer bosses 93 is fitted with an associated one of the fitting recesses 84 and an inner circumference portion of the base frame 4a is sandwiched between outer circumference portions of the inner plate 8 and outer plate 9.

The inner and outer plates 8, 9 are coupled to assemble the second side wall 4 when the bolt B1 inserted into the insertion hole 93a and communication hole 84a is screwed with the nut N1 retained in the retaining recess 83a in the state that the inner circumference portion of the base frame 4a is sandwiched between the outer circumference portions of the inner and outer plates 8, 9.

As the second side wall 4 is assembled, the gaps S1 and S2 are continuously formed between the base frame 4a and the main body plate 4b in each corner of a lower part of the second side wall 4. The gaps S1 and S2 then serve as an air introduction hole 15 according to the present disclosure.

The air introduction hole 15 is formed to extend into an L-shape along the corner of the lower part of the second side wall 4 in the front view of the second side wall 4. While the air introduction hole 15 is, in an upper part thereof, inclined towards the interior of the cover casing 2 to be gradually closer to an inner side surface of the cover casing 2 as illustrated in FIG.6, the air introduction hole 15 is, in a lower part thereof, inclined towards the interior of the cover casing 2 to be gradually closer to an inner bottom surface of the cover casing 2 as illustrated in FIG.5.

When the air suction means 7 is activated, negative pressure occurs in the interior of the cover casing 2 due to air suction operation of the air suction means 7 to thereby introduce air from the outside of the cover casing 2 into the inside through the air introduction hole 15. In so doing, each of the air introduction holes 15 has an upper half portion that is inclined towards the inner side surface of the cover casing 2 and a lower half portion that is inclined towards the inner bottom surface of the cover casing 2, so that the air having passed through the air introduction hole 15 turns back against the inner side surface and the inner bottom surface of the cover casing 2 and moves in a swirling manner in the interior of the cover casing 2 to generate a turbulent airflow (see the arrow Z1 in FIG.2). The chips M1 caused to float by the turbulent airflow move to an air suction means 7 side and are subsequently ejected into the outside of the cover casing 2 by using the air suction means 7. In this way, the chips M1 in the cover casing 2 can be entirely removed into the outside of the cover casing 2 without accumulating on the inner bottom surface.

Accordingly, the present disclosure enables the chip collecting device 1 having higher performance of collecting the chips M1. Then, there is no need to attach an air introduction unit as shown in Patent Document 1 to the cover casing 2, and the cover casing 2 is thus able to have a horizontally smaller shape. This allows the whole device to be made its size compact and spaces around an installed apparatus can be efficiently utilized.

The air introduction holes 15 are then formed to correspond to the respective corners in the lower part of the second side wall 4, so that the air passing through the air introduction holes 15 is concentratedly oriented to corners in the interior of the cover casing 2, in which the chips M1 particularly tend to accumulate. In this way, the chips M1 piling up in the corners of the interior of the cover casing 2 can be entirely removed into the outside of the cover casing 2.

The air introduction hole 15 of the present disclosure is also formed by combining the base frame 4a and main body plate 4b and thus there is no need of elaborate hole-making process for forming the air introduction hole 15 in the components, resulting in an easy-to-manufacture chip collecting device 1.

As the inner and outer plates 8, 9 are coupled to integrate, the inner and outer plates 8, 9 are also integrated with the base frame 4a. Therefore, no additional component is required to assemble the inner and the outer plates 8, 9 into the base frame 4a, enabling a cost effective chip collecting device 1 with less components.

In embodiments of the present disclosure, the air introduction hole 15 is L-shaped as viewed from the front of the second side wall 4, but is not limited to this configuration. For example, the air introduction hole 15 may be formed in other shapes.

In embodiments of the present disclosure, the air introduction hole 15 has the upper half portion that inclines towards the interior of the cover casing 2 to be gradually closer to the inner side surface of the cover casing 2 and the lower half portion that inclines towards the interior of the cover casing 2 to be gradually closer to the inner bottom surface of the cover casing 2. In this regard, the air introduction hole 15 may incline to be closer to at least one of the inner side and inner bottom surfaces of the cover casing 2.

In embodiments of the present disclosure, the air introduction hole 15 includes a pair of the air introduction holes 15 formed in the respective corners in the lower part of the second side wall 4, but may be configured to be formed in only one corner.

In embodiments of the present disclosure, the main body plate 4b is made of resin, yet may be formed from metal materials.

### INDUSTRIAL APPLICABILITY

The present disclosure is suitable for a chip collecting device for collecting chips that are created in cutting operations for cutting distal ends of electrode tips of spot welding.

### DESCRIPTION OF REFERENCE CHARACTERS

1: Chip Collecting Device
2: Cover Casing
3: First Side Wall
4: Second Side Wall
4a: Base frame
4b: Main Body Plate
7: Air Suction Tool (Air Suction Means)
8: Inner Plate
9: Outer Plate
10: Tip Dresser
11: Electrode Tip
11a: Distal End
13b: Cutting Blade
15: Air Introduction Hole
75: Chip Collecting Box (Chip Collecting Means)
M1: Chips

## Claims

1. A chip collecting device (1) for collecting chips (M1) that are created when a distal end (11a) of an electrode tip (11) of spot welding is cut by using a cutting blade (13b) of a tip dresser (10), the device comprising:
a box-shaped cover casing (2) secured to the tip dresser (10) to enclose the cutting blade (13b) and having rectangular plate shaped first and second side walls (4) opposing one another horizontally;
an air suction means (7) connected to the first side wall (3) and configured to suck air located inside the cover casing (2);
an air introduction hole (15) formed in the second side wall (4) and configured to introduce air from an outside of the cover casing (2) into an inside during air suction operation performed by the air suction means (7); and
a chip collecting means (75) configured to collect the chips (M1) moving together with the air that is sucked by the air suction means (7);
**characterized in that** the air introduction hole (15) is formed in a lower part of the second side wall (4) and inclined gradually closer to at least one of an inner side surface and inner bottom surface of the cover casing (2) towards an interior of the cover casing (2).

2. The chip collecting device (1) according to claim 1, **characterized in that** the air introduction hole (15) is formed to extend into an L-shape along a corner in the lower part of the second side wall (4).

3. The chip collecting device (1) according to claim 1, **characterized in that** the air introduction hole (15) includes a pair of air introduction holes (15) formed along respective corners in the lower part of the second side wall (4).

4. The chip collecting device (1) according to any one of claims 1 to 3, **characterized in that** the second side wall (4) includes a base frame (4a) having a rectangular shape and a main body plate (4b) configured to be assembled into an inner part of the base frame (4a), and the air introduction hole (15) is formed between the base frame (4a) and the main body plate (4b).

5. The chip collecting device (1) according to claim 4, **characterized in that** the main body plate (4b) includes an inner plate (8) positioned on an inner face side of the base frame (4a) and an outer plate (9) positioned on an outer face side of the base frame (4a), and the second side wall (4) is configured to be assembled by coupling the inner plate (8) and the outer plate (9) with an inner circumference portion of the base frame (4a) being sandwiched between outer circumference portions of the inner and outer plates (9).
